# EUROPEAN PATENT SPECIFICATION

(11) **EP 2 859 687 B1**
(45) Date of publication and mention of the grant of the patent: **04.07.2018**
(21) Application number: 13800205.0
(22) Date of filing: 31.05.2013
(51) Int. Cl.: H04L 12/26, H04L 12/751

(54) **OAM POWER PACKET**
OAM-LEISTUNGSPAKET
PAQUET D'ÉNERGIE OAM

(30) Priority: 07.06.2012 US 201213490750
(43) Date of publication of application: 15.04.2015
(73) Proprietor: Alcatel Lucent, 91620 Nozay (FR)
(72) Inventor: WONG, Kin-Yee, Ottawa, Ontario K2K 2E6 (CA); RORAI, Joseph, Ottawa, Ontario K2K 2E6 (CA)
(74) Representative: Wetzel, Emmanuelle
(86) International application number: PCT/CA2013/050422
(87) International publication number: WO 2013/181754

(56) References cited:
- EP-A1- 2 323 440
- WO-A1-2011/150983
- US-A1- 2004 037 226
- US-A1- 2005 111 428
- US-A1- 2005 185 632
- US-A1- 2008 049 620
- US-A1- 2010 284 287
- MANRAL IPINFUSION INC V: "Benchmarking Power usage of networking devices; draft-manral-bmwg-power-usage-02.txt", BENCHMARKING POWER USAGE OF NETWORKING DEVICES; DRAFT-MANRAL-BMWG-POWER-USAGE-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 2, 3 January 2011 (2011-01-03), pages 1-8, XP015073300, [retrieved on 2011-01-03]
- BROWN S BHANDARE S DOSHI UNIVERSITY OF COLORADO T X ET AL: "The Energy Aware Dynamic Source Routing Protocol <draft-brown-eadsr-00.txt>; draft-brown-eadsr-00.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, 23 June 2003 (2003-06-23), XP015000378, ISSN: 0000-0004

## Description

### FIELD OF INVENTION

This invention relates to determination of power costs between points in a telecommunication network.

### BACKGROUND

Energy and power consumption are increasingly becoming a significant business issue as energy costs and environmental impact are becoming more important in business models. At the same time, the cost of providing energy may vary. The latter is becoming more common as utilities attempt to address finite energy generation by reducing demand for peak energy. The cost of energy may vary with time and/or geography. For example, there is often less demand for electricity late at night than in the middle of the day, and in an attempt to shift consumption of electricity to off-peak hours utilities may lower the cost of the electricity at night and raise the cost of the electricity during the day.

In addition, as energy costs rise or power usage becomes more important for environmental or fiscal reasons, the energy cost associated with packet transmission through a telecommunication network may become the primary method of charging for data transmission.

A method which allowed a telecommunication node to learn the power cost of each route to a destination would allow the node to select a particular route if the node needed to take power usage over the network into account, such as to minimize cost or power usage during transmission. It would also allow an operator to propose charges for data transmission in which the charges are based on power consumption.

EP 2 323 440 A1, describes a method where a path is not yet known, but the path is yet to be selected, which should be the path which has the minimum cost. A destination node which received a request packet sends a reply packet, namely the route-determination packet, back to the source node to inform the source node about the selected path.

V. Manral: "Benchmarking Power usage of networking devices", draft-manral-bmwg-power-usage-02.txt; XP15073300A, describes a method where the power consumption of a device can be measured by a power meter and the power consumption can be influenced by network factors, device factors and traffic factors.

WO 2011/150983 A1 describes a route selection for a portion of a path based on the power consumption attributable to use of interfaces along a portion of the path. On the control plane or by a path computation program or by any other equipment, the interfaces used by a portion of a first possible path are determined, and for each interface the power consumption attributable to the use of that interface by the path is determined. Then, an aggregate cost based on at least power consumption for the respective interfaces is determined and compared with other possible routes and the lowest cost route is selected. Brown et. al.: "The Energy Aware Dynamic Source Routing Protocol", , Internet Draft, 23 June 2003, XP 15000378A) teaches that a targetnode sends a "Route Reply" to the initiator of the route request packet in which it includes the entire source route from the initiator to the destination and the minimum transmit powers for each hop. aspect, a method is provided in which a first packet is generated at a first node with a packet type indicating that a power cost of a path is to be determined. The first packet is transmitted. A second packet is received at the first node, the second packet being in reply to the first packet. At the first node, the power cost of the path is determined from the data portion of the second packet.

According to another aspect, a method is provided for processing at a first node a packet having a destination address which is the address of the first node. It is determined whether a packet type of the packet indicates that the power cost of a path is to be determined. If so, it is then determined whether a next node in the path exists. If a next node in the path exists, then the power cost of transmitting a packet from the first node to the next node is determined, the power cost is included in the data portion of the first packet, the destination address of the packet is set to be the address of the next node, and the packet is transmitted to the next node. If a next node in the path does not exist, then the packet type of the packet is set to indicate a reply to a request for determination of a power cost of a path, the destination address of the packet is set to be the address of a second node which originated the packet, and the packet is transmitted to the second node.

According to another aspect, a system is provided having a source node and a destination node for a path. The source node is adapted to generate a first packet with a packet type indicating that a power cost of a path is to be determined, to transmit the first packet, to receive a second packet in reply to the first packet, and to determine from the data portion of the second packet the power cost of the path. The destination node is adapted to determine whether a packet type of a received packet indicates that the power cost of a path is to be determined, to set the packet type of such a packet to indicate that the packet is
a reply to a request for determination of a power cost of a path, and to transmit such a the packet to the source node. The system may also include one or more intermediate nodes along the path. Each such intermediate node is adapted to determine whether a packet type of a packet received at the intermediate node indicates that the power cost of a path is to be determined, to determine the power cost of transmitting a packet from the intermediate node to a next node in the path, to adjust the data portion of the received packet so as to include the power cost of transmitting a packet from the intermediate node to the next node, and to forward the received packet to the next node

The methods of embodiments of the invention may be stored as logical instructions on a non-transitory computer-readable storage medium in a form executable by a computer processor.

Embodiments of the invention allow the power cost of transmitting packets along specified paths to be determined by embedding power cost information of each hop along the path within an OAM packet.

### BRIEF DESCRIPTION OF THE DRAWINGS

The features and advantages of embodiments of the invention will become more apparent from the following detailed description of the preferred embodiment(s) with reference to the attached figures, wherein:
FIG. 1 is a portion of a telecommunication network;
FIG. 2 is a flowchart of a method carried out by the originating node of FIG. 1 according to one embodiment of the invention;
FIG. 3 is a flowchart of a method carried out by an intermediate node or destination node of FIG. 1 according to one embodiment of the invention; and
FIG. 4 is a flowchart of another method carried out by the originating node of FIG. 1 according to one embodiment of the invention.

It is noted that in the attached figures, like features bear similar labels.

### DETAILED DESCRIPTION OF THE PREFERRED EMBODIMENTS

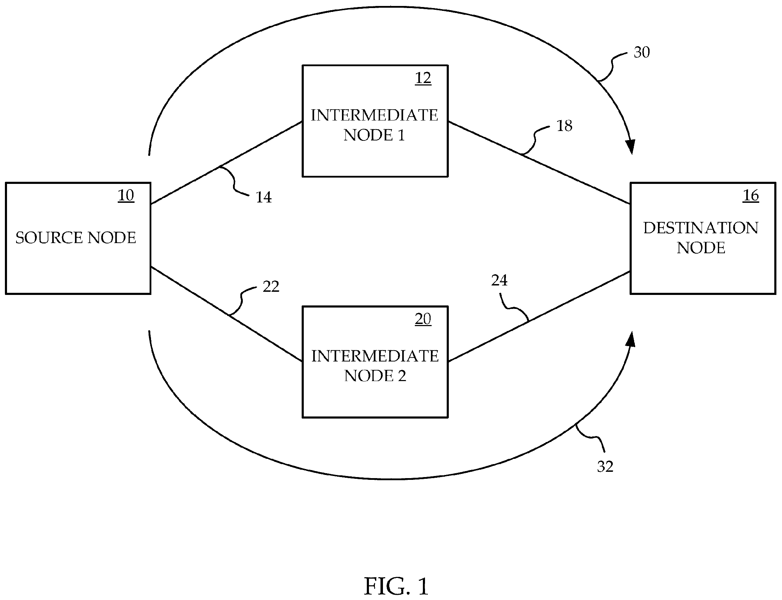

Referring to FIG. 1, a portion of a telecommunication network is shown. A source node 10 is connected through a first interface to a first intermediate node 12 via a first link 14. The first intermediate node 12 is connected to a destination node 16 via a second link 18. The source node 10 is also connected through a second interface to a second intermediate node 20 via a third link 22, and the second intermediate node 20 is connected to the destination node 16 via a fourth link 24. The first link 14, the first intermediate node 12, and the second link 18 together make up a first path 30 from the source node 10 to the destination node 16. The third link 22, the second intermediate node 20, and the fourth link 24 together make up a second path 32 from the source node 10 to the destination node 16.

The network shown in FIG. 1 contains only two intermediate nodes and only two paths between the source node and the destination node. More generally there are two or more intermediate nodes, at least one of which is connected to the source node, and at least two paths from the source node to the destination node. Each node may be any type of network element within the telecommunication network, such as a router.

It should be noted that in the most trivial case there will be only one path between the source node and the destination node, with no intermediate nodes. The embodiments described below will still function in such a simple network, but the embodiments of the invention will be described with reference to the network shown in FIG. 1.

Broadly, a source node generates a first packet with a packet type indicating that a power cost of a path is to be determined. The packet is transmitted from node to node along the path, each node including in the data portion of the packet the power cost of receiving, switching/routing, and transmitting (also collectively referred to herein as forwarding) a packet to the next node in the path. Upon reaching a destination node, a second packet having a packet type indicating that the packet is a reply to a request for determination of a power cost of a path is generated by the destination node, and the data portion of the first packet is copied to the data portion of the second packet. The second packet is transmitted back to the source node, and when the source node receives the second packet the power cost of the path is determined from the data portion of the second node. This will be explained using the first path 30 in FIG. 1 and IP routing as an example.

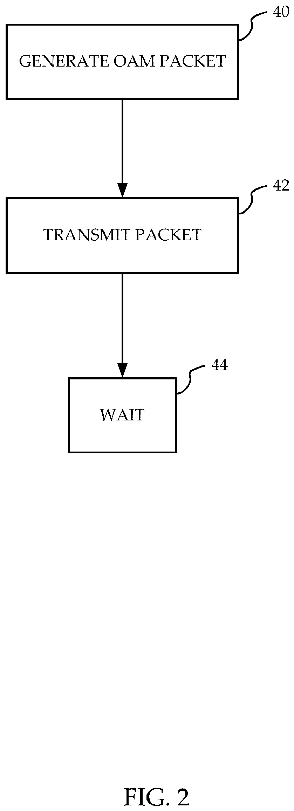

Referring to FIG. 2, a flowchart of a method carried out by the source node 10 according to one embodiment of the invention is shown. The method is executed whenever the source node 10 determines that the power cost of a path is to be determined. This can be at regular intervals, such as every 10 seconds. Sending packets often is desirable because the power used by a node may change. This can also be done by an interrupt, such as if a new path or new equipment becomes available.

At step 40 the source node 10 generates a packet referred to as an OAM Power Request packet. The source node specifies that the new packet is an OAM Power Request packet by setting the Packet Type to a particular value. The source node 10 populates a Source Address field of the OAM Power Request packet with the address of the source node 10. The source node 10 populates a Destination Address field of the OAM Power Request packet with the address of the next hop in the path for which the source node 10 wishes to know the power cost. In the example of path 30, this is the address of the first intermediate node 12.

Within the data portion of the OAM Power Request packet, the source node 10 embeds information identifying the complete path. This is a list of addresses of nodes in the path. In the example of the path 30 this is the address of the intermediate node 12 and of the destination node 16.

Finally, the source node 10 appends its own power cost of transmitting the packet through an interface which starts the path to the data portion of the OAM Power Request Packet. In the example of the first path 30 this will be the power cost of transmitting packets through the interface leading to the first link 14. The power cost entered by the source node 10, along with the power costs entered by intermediate nodes as described below, may be in any unit. For example, the power cost may be expressed as a monetary cost of the power required to transmit packets, such as $/GB. As another example, the power cost may be expressed as a power usage required to transmit packets, such as watts/GB/second. If the monetary cost is desired in this example, then the source node can determine the total monetary cost using the price of electricity along with the total power usage of the path, although this may be more difficult (though not insurmountable) if the cost of electricity varies with the geographic location of the intermediate nodes.

At step 42 the source node 10 transmits the OAM Power Request packet through the interface leading to the path for which power cost information is desired. At step 44 the source node 10 enters a wait mode, and normal procedures for a packet transmission expecting a reply is carried out.

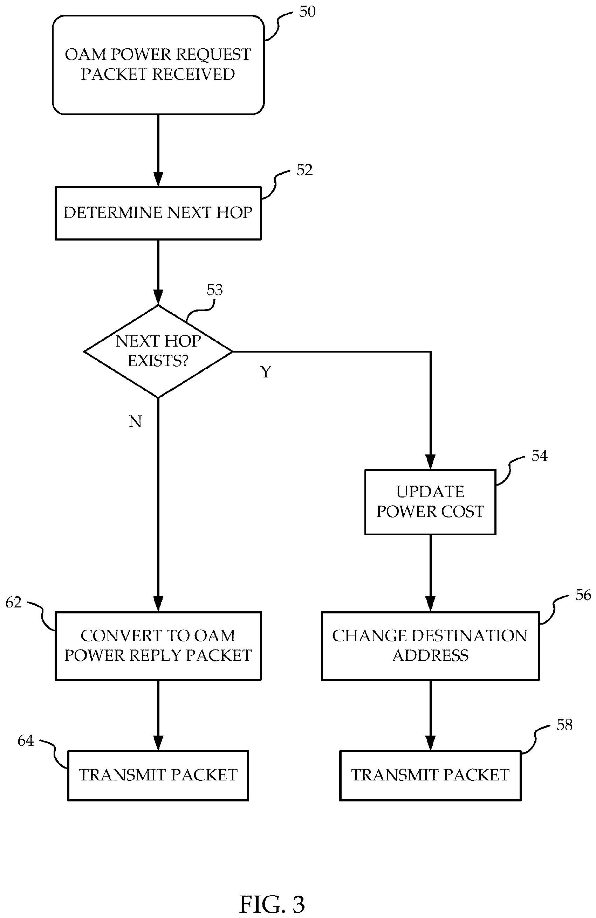

Referring to FIG. 3, a flowchart of a method carried out by any node according to one embodiment of the invention is shown. This method can be implemented on all nodes, though in the network shown in FIG. 1 it will only be executed by the intermediate nodes 12 and 20 and the destination node 16.

When a packet is received at a node, if the node determines that the destination address of the packet matches the address of the node then the contents of the packet are extracted. If the packet type of the packet identifies the packet as being an OAM Power Request packet, then the method described with reference to FIG. 3 is triggered at step 50.

At step 52 the node determines the next hop along the path, if any. One way of determining this is to consult the list of addresses embedded in the packet. The address which follows the address of the node in the list is determined. If there is no next address, i.e. the last address in the list is the address of the node, then this is also noted by the node, such as by setting the next address to NULL.

The node determines at step 53 whether there are any more nodes in the path, as indicated whether a next address was found at step 52. If there is a next address, then at step 54 the node adds the power cost of receiving, switching/routing, and transmitting a packet to an interface leading to that address to the power cost already contained in the packet. In this way the power cost contained in the packet is a cumulative power cost of sending a packet along the path so far.

The node knows its power cost of receiving, switching/routing, and transmitting packets in any way. As an example, the node knows the maximum power consumption and the maximum bandwidth of the line card on which packets along the path are to be received, the maximum power consumption and the maximum bandwidth of switching/routing/packet processing functions, the maximum power consumption and the maximum bandwidth of the line card on which packets along the path are to be transmitted, and the monetary cost of power at the location of the node and at the current time. The first three of these will vary depending on the particular hardware used and the vendor, and the monetary cost may vary depending on the source power supply and the time of day. Using this information, the node can compute the power cost of receiving, switching/routing, and transmitting packets, and inserts the power cost into the OAM Power Request packet.

The node may even use different numbers for multiple switching/routing/packet processing scenarios, and it should be noted that the term "switching/routing" may include any processing on packets carried out by the node. For example, the node may perform encryption/ decryption of the packets, or may carry out deep packet inspection.

At step 56 the node re-encapsulates the packet and sets the destination address of the packet to be the address of the next node, as determined at step 52. At step 58 the node transmits the packet to the next node.

If the node determines at step 53 that there is not a next node, then the current node is the destination node. At this point, the power cost contained in the packet is a cumulative power cost of sending a packet along the path.

At step 62 the node re-encapsulates the packet but sets the packet type to indicate that the packet is an OAM Power Reply packet, which is a reply to an OAM Power Request message. The node sets the destination address to be that of the source node 10, which the destination node 16 knows because it is the source address of the packet received at step 50. At step 64 the node transmits the packet.

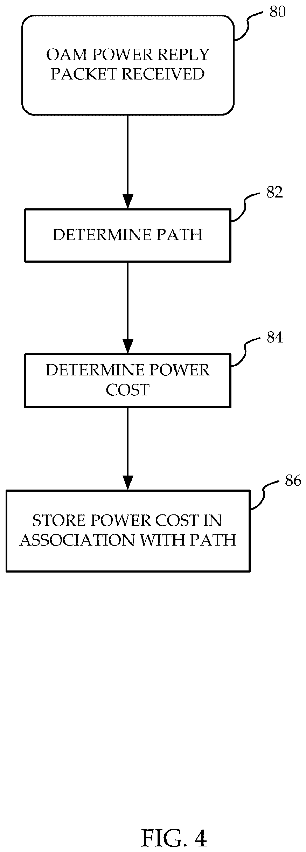

On its way back to the source node 10, the OAM Power Reply packet is passed through each hop without being extracted or processed. The return path followed by the OAM Power Reply packet need not be the same path for which the power cost is being determined, such as if IP forwarding is used, since the destination address of the OAM Power Reply packet is only that of the source node 10. The OAM Power Reply packet eventually reaches the source node 10, where it is processed by the source node 10. Referring to FIG. 4, a flowchart of a second method carried out by the source node according to one embodiment of the invention is shown.

When a packet is received at a node, if the node determines that the destination address of the packet matches the address of the node then the contents of the packet are extracted. If the packet type of the packet identifies the packet as being an OAM Power Reply packet, then the method described with reference to FIG. 4 is triggered at step 80. At step 82 the node, which in this example is the source node 10, determines the path from the data portion of the packet, the path being defined by the list of node addresses contained in the data portion of the packet. At step 84 the node determines the power cost of the path as contained in the data portion of the packet. At step 86 the node stores the power cost of the path in association with the path.

The methods described above are preferably implemented as logical instructions in the form of software. Alternatively, each or all of the logical instructions may be implemented as hardware, or as a combination of software or hardware. If in the form of software, the logical instructions may be stored on a non-transitory computer-readable storage medium in a form executable by a computer processor.

Embodiments of the invention have been described using IP forwarding as an example. Other means of pre-defining the path may be used, as long as an OAM Power Request packet travels along the path with each node along the way adding the power cost for its portion of the path. For example, if MPLS is used for forwarding packets, the source node 10 may deliver a label to each node along a path of interest so that the packet is forwarded along that particular path, using TTL expiration to ensure that the OAM Power Request packet is extracted at the various hops along the path. Alternatively, each router at each hop can place a Router Alert label on the packet before transmitting the packet to the next node on the path. The Router Alert label causes the next node to extract the packet. In either case, however, the packet would still contain the hop-by-hop IP addresses in its data portion to ensure that each node in the path which receives the packet knows where to send the packet next.

Embodiments of the invention have been described as each node along the path adding its power cost to the overall power cost of the preceding portions of the path. Alternatively, each node can insert separately its power cost of forwarding a packet to the next hop. In this way the data portion of the OAM Power Request packet contains the power cost of each hop along the path. When the source node 10 receives the corresponding OAM Power Reply packet, it determines the power cost of the path by summing the separate power costs of each hop. This provides additional information to the source node 10 in that the source node 10 may also store the power costs of parts of the path.

Embodiments of the invention have been described as the source node gathering simply the power cost of the path. Alternatively, or additionally, the power cost of the path with other constraints may be determined. For example, the source node 10 can specify a bandwidth in the data portion of the OAM Power Request packet. At each node the bandwidth specified in the data portion of a received OAM Power Request packet is determined, and the power cost of forwarding the specified amount of data along the next hop of the path is stored in the OAM Power Request packet. Another constraint could be time of day. In general, the power cost of a path with any constraint may be determined by use of the OAM Power Request packet, as long as the source node 10 can define and include the constraint in the OAM Power Request packet when generating the OAM Power Request packet.

Embodiments of the invention have been described as the source node determining the power cost of transmitting packets to a destination node along a specified path. The invention may be used additionally to determine the power cost of a reverse path from the destination node. This may provide useful information related to downloading content from the destination node, and may prove to be particularly beneficial if the path used or the power cost is different in the upload direction (i.e. from the source node 10 to the destination node 16) than in the download direction (i.e. from the destination node 16 to the source node 10). The methods described above are used, but in reverse. The destination address initially populated by the source node is that of the destination node, and the packet type of the packet is set to indicate that the power cost of a reverse path is to be determined. This packet type is referred to herein as OAM Power Downstream Request. As each intermediate node receives this packet it simply forwards the packet along towards the destination node. The path followed by this packet need not be the same path for which the power cost of the reverse path is being determined, such as if IP forwarding is used, since the destination address of the packet is only that of the destination node. When the destination node is reached, the destination node determines that the packet type is OAM Power Downstream Request, and the destination node changes the packet type to indicate a reply to a power cost determination request. The reply packet sent from the destination node back to the source node follows the specified path, for example as defined in the data portion of the packet. Each node along the path stores its power cost of forwarding a packet to the next hop along the path back to the source node. When the source node 10 receives a packet whose packet type indicates that the packet is a reply to a power cost determination request, the source node extracts and determines the power cost of the total path as described above, the path being defined as a path from the destination node to the source node.

It should be emphasized that in the embodiment in which determination of the power cost of a reverse path can be determined, both the OAM Power Request packet type and the OAM Power Downstream Request packet type can be viewed as specific cases of a general case of a packet type which indicates that a power cost of a path is to be determined.

The embodiments presented are exemplary only and persons skilled in the art would appreciate that variations to the embodiments described above may be made without departing from the spirit of the invention. The scope of the invention is solely defined by the appended claims.

## Claims

1. A method of processing at an intermediate node (12) a packet having a destination address which is the address of the intermediate node (12), comprising:
determining whether a packet type of the packet indicates that the power cost of a path (30) is to be determined; and
if the packet has a packet type indicating that the power cost of a path (30) is to be determined:
determining (53) whether a next node (16) in the path (30) exists wherein information identifying the path (30) completely is embedded by a source node (10) which originated the packet in a data portion of the packet;
if a next node (16) in the path (30) exists, determining the power cost of receiving, switching/routing, and transmitting a packet from the intermediate node (12) to the next node (16), including (54) the power cost in the data portion of the packet, setting (56) the destination address of the packet to be the address of the next node (16), and transmitting (58) the packet to the next node (16); and
if a next node (16) in the path (30) does not exist, setting (62) the packet type of the packet to indicate a reply to a request for determination of a power cost of a path (30), setting the destination address of the packet to be the address of the source node (10), and transmitting (64) the packet to the source node (10) thereby enabling the source node (10) to determine from the data portion of the packet the power cost of the path (30), wherein the source node (10) included its own power cost of transmitting the packet through an interface which starts the path (30) within the data portion of the packet.

2. The method of claim 1 wherein determining the power cost of receiving, switching/routing, and transmitting a packet comprises determining the power cost of receiving, switching/routing, and transmitting packets at a bandwidth specified in the data portion of the packet.

3. The method of claim 1 wherein the information identifying the path (30) completely includes a sequence of IP addresses that lie along the path (30).

4. The method of claim 1 wherein the path (30) is a download path, the method further comprising setting at the intermediate node (12) the destination address of the packet as the address of the source node (10) from which the path (30) originates.

5. The method of claim 1 further comprising including a bandwidth within the data portion of the packet.

6. An intermediate node (12) adapted to process a packet having a destination address which is the address of the intermediate node (12), to determine whether a packet type of the packet indicates that the power cost of a path (30) is to be determined; and if the packet has a packet type indicating that the power cost of a path (30) is to be determined, the intermediate node (12) being adapted to determine (53) whether a next node (16) in the path (30) exists wherein information identifying the path (30) completely is embedded by a source node (10) which originated the packet in a data portion of the packet; if a next node (16) in the path (30) exists, the intermediate node (12) is adapted to determine the power cost of receiving, switching/routing, and transmitting a packet from the intermediate node (12) to the next node (16), to include (54) the power cost in the data portion of the packet, to set (56) the destination address of the packet to be the address of the next node (16), and to transmit (58) the packet to the next node (16); and if a next node (16) in the path (30) does not exist, the intermediate node (12) is adapted to set (62) the packet type of the packet to indicate a reply to a request for determination of a power cost of a path (30), to set the destination address of the packet to be the address of the source node (10), and to transmit (64) the packet to the source node (10) thereby enabling the source node (10) to determine from the data portion of the packet the power cost of the path (30), wherein the source node (10) included its own power cost of transmitting the packet through an interface which starts the path (30) within the data portion of the packet.

7. The intermediate node (12) of claim 6 wherein in determining the power cost of receiving, switching/routing, and transmitting a packet from the intermediate node (12) to the next node (16) the intermediate node (12) is adapted to determine the power cost of receiving, switching/routing, and transmitting packets at a bandwidth specified in the data portion of the packet.

## Patentansprüche

1. Verfahren zum Verarbeiten, an einem zwischengeschalteten Knoten (12), eines Pakets mit einer Zieladresse, die die Adresse des zwischengeschalteten Knotens (12) ist, umfassend:
Bestimmen, ob ein Pakettyp des Pakets angibt, dass die Stromkosten eines Pfads (30) bestimmt werden sollen; und
wenn das Paket einen Pakettyp aufweist, der angibt, dass die Stromkosten eines Pfads (30) bestimmt werden sollen:
Bestimmen (53), ob ein nächster Knoten (16) auf dem Pfad (30) vorliegt, wobei Informationen, die den Pfad (30) vollständig identifizieren, von einem Quellknoten (10), der das Paket erstellt hat, in einem Datenteil des Pakets eingebettet werden;
wenn ein nächster Knoten (16) auf dem Pfad (30) vorliegt, Bestimmen der Stromkosten zum Empfangen, Umschalten/Routen und Übertragen eines Pakets von dem zwischengeschalteten Knoten (12) zu dem nächsten Knoten (16), Einbeziehen (54) der Stromkosten in den Datenteil des Pakets, Einstellen (56) der Zieladresse des Pakets als die Adresse des nächsten Knotens (16) und Übertragen (58) des Pakets an den nächsten Knoten (16); und
wenn kein nächster Knoten (16) auf dem Pfad (30) vorliegt, Einstellen (62) des Pakettyps des Pakets, um eine Antwort auf eine Anforderung zur Bestimmung von Stromkosten eines Pfads (30) anzugeben, Einstellen der Zieladresse des Pakets als die Adresse des Quellknotens (10) und Übertragen (64) des Pakets an den Quellknoten (10), wodurch es dem Quellknoten (10) ermöglicht wird, aus dem Datenteil des Pakets die Stromkosten des Pfads (30) zu bestimmen, wobei der Quellknoten (10) seine eigenen Stromkosten zum Übertragen des Pakets durch eine Schnittstelle, an der der Pfad (30) beginn, in den Datenteil des Pakets einbezieht.

2. Verfahren nach Anspruch 1, wobei das Bestimmen der Stromkosten zum Empfangen, Umschalten/Routen und Übertragen eines Pakets das Bestimmen der Stromkosten zum Empfangen, Umschalten/Routen und Übertragen von Paketen bei einer Bandbreite umfasst, die in dem Datenteil des Pakets festgelegt ist.

3. Verfahren nach Anspruch 1, wobei die Informationen, die den Pfad (30) identifizieren, eine Sequenz von IP-Adressen, die an dem Pfad (30) liegen, vollständig identifizieren.

4. Verfahren nach Anspruch 1, wobei der Pfad (30) ein Download-Pfad ist, wobei das Verfahren ferner das Einstellen der Zieladresse des Pakets als die Adresse des Quellknotens (10), von dem der Pfad (30) ausgeht, an dem zwischengeschalteten Knoten (12) umfasst.

5. Verfahren nach Anspruch 1, ferner umfassend einbeziehen einer Bandbreite in den Datenteil des Pakets.

6. Zwischengeschalteter Knoten (12), der dazu vorgesehen ist, ein Paket mit einer Zieladresse zu verarbeiten, die die Adresse des zwischengeschalteten Knotens (12) ist, um zu bestimmen, ob ein Pakettyp des Pakets angibt, dass die Stromkosten eines Pfads (30) bestimmt werden sollen; und wobei, wenn das Paket einen Pakettyp aufweist, der angibt, dass die Stromkosten eines Pfads (30) bestimmt werden sollen, der zwischengeschaltete Knoten (12) dazu vorgesehen ist, zu bestimmen (53), ob ein nächster Knoten (16) auf dem Pfad (30) vorliegt, wobei Informationen, die den Pfad (30) vollständig identifizieren, von einem Quellknoten (10), der das Paket erstellt hat, in einem Datenteil des Pakets eingebettet werden; wenn ein nächster Knoten (16) auf dem Pfad (30) vorliegt, der zwischengeschaltete Knoten (12) dazu vorgesehen ist, die Stromkosten zum Empfangen, Umschalten/Routen und Übertragen eines Pakets von dem zwischengeschalteten Knoten (12) zu dem nächsten Knoten (16) zu bestimmen, die Stromkosten in den Datenteil des Pakets einzubeziehen (54), die Zieladresse des Pakets als die Adresse des nächsten Knotens (16) einzustellen (56) und das Paket an den nächsten Knoten (16) zu übertragen; und wenn kein nächster Knoten (16) auf dem Pfad (30) vorliegt, der zwischengeschaltete Knoten (12) dazu vorgesehen ist, den Pakettyp des Pakets einzustellen (62), um eine Antwort auf eine Anforderung zur Bestimmung von Stromkosten eines Pfads (30) anzugeben, die Zieladresse des Pakets als die Adresse des Quellknotens (10) einzustellen (56) und das Paket an den Quellknoten (10) zu übertragen (64), wodurch es dem Quellknoten (10) ermöglicht wird, aus dem Datenteil des Pakets die Stromkosten des Pfads (30) zu bestimmen, wobei der Quellknoten (10) seine eigenen Stromkosten zum Übertragen des Pakets durch eine Schnittstelle, an der der Pfad (30) beginn, in den Datenteil des Pakets einbezieht.

7. Zwischengeschalteter Knoten (12) nach Anspruch 6, wobei der zwischengeschaltete Knoten (12) beim Bestimmen der Stromkosten zum Empfangen, Umschalten/Routen und Übertragen eines Pakets von dem zwischengeschalteten Knoten (12) an den nächsten Knoten (16) dazu vorgesehen ist, die Stromkosten zum Empfangen, Umschalten/Routen und Übertragen von Paketen bei einer Bandbreite zu bestimmen, die in dem Datenteil des Pakets festgelegt ist.

## Revendications

1. Procédé de traitement au niveau d'un noeud intermédiaire (12) d'un paquet ayant une adresse de destination qui est l'adresse du noeud intermédiaire (12), comprenant les étapes suivantes :
déterminer si un type de paquet du paquet indique que le coût énergétique d'un chemin (30) doit être déterminé ; et
si le paquet a un type de paquet indiquant que le coût énergétique d'un chemin (30) doit être déterminé :
déterminer (53) si un noeud suivant (16) dans le chemin (30) existe, des informations identifiant le chemin (30) étant entièrement intégrées dans un noeud source (10) d'où provient le paquet dans une partie de données du paquet ;
si un noeud suivant (16) dans le chemin (30) existe, déterminer le coût énergétique de réception, commutation/acheminement et transmission d'un paquet à partir du noeud intermédiaire (12) vers le noeud suivant (16), inclure (54) le coût énergétique dans la partie de données du paquet, définir (56) l'adresse de destination du paquet comme étant l'adresse du noeud suivant (16) et transmettre (58) le paquet au noeud suivant (16) ; et
si un noeud suivant (16) dans le chemin (30) n'existe pas, définir (62) le type de paquet du paquet pour indiquer une réponse à une demande pour déterminer un coût énergétique d'un chemin (30), définir l'adresse de destination du paquet comme étant l'adresse du noeud source (10) et transmettre (64) le paquet au noeud source (10) permettant ainsi au noeud source (10) de déterminer à partir de la partie de données du paquet le coût énergétique du chemin (30), le noeud source (10) incluant son propre coût énergétique de transmission du paquet par l'intermédiaire d'une interface d'où commence le chemin (30) dans la partie de données du paquet.

2. Procédé selon la revendication 1 dans lequel la détermination du coût énergétique de réception, commutation/acheminement et transmission d'un paquet comprend la détermination du coût énergétique de réception, commutation/acheminement et transmission de paquets à une largeur de bande spécifiée dans la partie de données du paquet.

3. Procédé selon la revendication 1 dans lequel les informations identifiant le chemin (30) incluent entièrement une séquence d'adresses IP situées le long du chemin (30).

4. Procédé selon la revendication 1 dans lequel le chemin (30) est un chemin de téléchargement, le procédé comprenant en outre la définition au niveau du noeud intermédiaire (12) de l'adresse de destination du paquet en tant qu'adresse du noeud source (10) d'où commence le chemin (30).

5. Procédé selon la revendication 1 comprenant en outre l'inclusion d'une largeur de bande dans la partie de données du paquet.

6. Noeud intermédiaire (12) adapté pour traiter un paquet ayant une adresse de destination qui est l'adresse du noeud intermédiaire (12), pour déterminer si un type de paquet du paquet indique que le coût énergétique d'un chemin (30) doit être déterminé ; et si le paquet a un type de paquet indiquant que le coût énergétique d'un chemin (30) doit être déterminé, le noeud intermédiaire (12) est adapté pour déterminer (53) si un noeud suivant (16) dans le chemin (30) existe, des informations identifiant le chemin (30) étant entièrement intégrées dans un noeud source (10) d'où provient le paquet dans une partie de données du paquet ;
si un noeud suivant (16) dans le chemin (30) existe, le noeud intermédiaire (12) est adapté pour déterminer le coût énergétique de réception, commutation/acheminement et transmission d'un paquet à partir du noeud intermédiaire (12) vers le noeud suivant (16), pour inclure (54) le coût énergétique dans la partie de données du paquet, pour définir (56) l'adresse de destination du paquet comme étant l'adresse du noeud suivant (16) et pour transmettre (58) le paquet au noeud suivant (16) ;
et si un noeud suivant (16) dans le chemin (30) n'existe pas, le noeud intermédiaire (12) est adapté pour définir (62) le type de paquet du paquet pour indiquer une réponse à une demande pour déterminer un coût énergétique d'un chemin (30), pour définir l'adresse de destination du paquet comme étant l'adresse du noeud source (10) et pour transmettre (64) le paquet au noeud source (10) permettant ainsi au noeud source (10) de déterminer à partir de la partie de données du paquet le coût énergétique du chemin (30), le noeud source (10) incluant son propre coût énergétique de transmission du paquet par l'intermédiaire d'une interface d'où commence le chemin (30) dans la partie de données du paquet.

7. Noeud intermédiaire (12) selon la revendication 6 dans lequel dans la détermination du coût énergétique de réception, commutation/acheminement et transmission d'un paquet à partir du noeud intermédiaire (12) vers le noeud suivant (16), le noeud intermédiaire (12) est adapté pour déterminer le coût énergétique de réception, commutation/acheminement et transmission de paquets à une largeur de bande spécifiée dans la partie de données du paquet.
